# FASCICULE DE BREVET EUROPEEN

(11) **EP 2 180 207 B1**
(45) Date de publication et mention de la délivrance du brevet: **28.09.2011**
(21) Numéro de dépôt: 09172474.0
(22) Date de dépôt: 07.10.2009
(51) Int. Cl.: F16F 13/10

(54) **Support antivibratoire hydraulique et véhicule comportant un tel support**
Schwingungstilger und Fahrzeug mit einem solchen Schwingungstilger
Vibration isolator and vehicle provided with such an isolator

(30) Priorité: 23.10.2008 FR 0857216
(43) Date de publication de la demande: 28.04.2010
(73) Titulaire: Hutchinson, 75008 Paris (FR)
(72) Inventeur: Lemaire, Gabriel, 28200, Saint-Denis-les-Ponts (FR); Petit, Pascal, 45190 Beaugency (FR)
(74) Mandataire: Cabinet Plasseraud

(56) Documents cités:
- EP-A- 1 083 362
- EP-A- 1 602 853
- EP-A- 1 923 597
- US-A- 5 240 233

## Description

La présente invention est relative aux supports antivibratoires hydrauliques et aux véhicules comportant de tels supports.

Plus particulièrement, l'invention concerne un support antivibratoire hydraulique destiné à être interposé aux fins d'amortissement entre des premier et deuxième éléments rigides, ce support antivibratoire comprenant :
- des première et deuxième armatures destinées à être fixées aux deux éléments rigides,
- une première platine,
- un corps en élastomère qui relie entre elles les deux armatures et qui délimite, avec la première platine, une chambre de travail remplie de liquide,
- un premier passage étranglé rempli de liquide qui présente une première fréquence de résonance, et qui relie la chambre de travail à une chambre intermédiaire,
- une seconde platine, comprenant un orifice principal,
- une poche souple qui délimite avec ladite seconde platine, une chambre de compensation remplie de liquide,
- un second passage étranglé rempli de liquide qui présente une seconde fréquence de résonance.

Le document WO/2004/081408 décrit un exemple d'un tel support hydraulique, dans lequel un piston se déplace dans la chambre intermédiaire et qui ouvre ou ferme un prolongement du premier passage étranglé vers la chambre de compensation en fonction des amplitudes des vibrations auxquelles est soumis le support vibratoire, le piston étant rappelé à sa position de repos par un ressort.

Le document US5240233 décrit aussi un support hydraulique similaire, dans lequel le second passage étranglé relie la chambre de compensation à la chambre intermédiaire.

Les supports antivibratoires de ce type présentent l'inconvénient de nécessiter l'utilisation de pièces unitaires mobiles dans la chambre intermédiaire de sorte que :
- un risque de coincement existe,
- l'assemblage du support est complexe.

La présente invention a notamment pour but de proposer un support antivibratoire qui présente une amélioration en supprimant les inconvénients de l'art antérieur.

A cet effet, selon l'invention, un support antivibratoire du genre en question est défini par les caractéristiques de la revendication 1.

Grâce à ces dispositions, on limite les risques de coincement on simplifie le montage du support, la membrane souple ne nécessitant pas de pièce de rappel additionnelle, et étant rappelée à sa position de repos par ses propres caractéristiques élastiques.

Dans des modes de réalisation préférés de l'invention, on peut éventuellement avoir recours en outre à l'une et/ou à l'autre des dispositions suivantes :
- la membrane souple présente une position de repos dans laquelle elle n'obture pas l'orifice principal, position à laquelle est rappelée par ses propres caractéristiques élastiques lorsqu'une différence de pression entre la chambre auxiliaire et la chambre intermédiaire est inférieure à une première valeur prédéterminée,
- la membrane souple est adaptée pour obturer l'orifice principal lorsque la différence de pression entre la chambre auxiliaire et la chambre intermédiaire dépasse un seuil prédéterminé,

- la première platine comprend au moins un orifice d'entrée équipé dudit clapet anti-retour,
- la seconde platine comprend un trou calibré appartenant au second chemin d'écoulement, et faisant communiquer en permanence la chambre auxiliaire avec la chambre de compensation,
- la membrane souple est réalisée en matériau élastomère,
- la membrane souple comporte un insert de renfort situé en vis-à-vis de l'orifice principal et présentant un diamètre supérieur au diamètre du trou principal,
- la première fréquence de résonance est comprise entre 15 et 200 Hz, et la deuxième fréquence de résonance inférieure à 20 Hz,
- le clapet anti-retour comprend une membrane souple d'élastomère qui est interposée avec jeu entre la première platine et une grille de maintien solidaire de la première platine, ladite membrane souple d'élastomère du clapet anti-retour étant disposée en regard d'au moins un orifice d'entrée ménagé dans la première platine et ladite grille de maintien communiquant avec la chambre auxiliaire, ladite membrane souple d'élastomère du clapet anti-retour étant adaptée pour vibrer librement entre la première platine et la grille de maintien sans que le clapet anti-retour ne s'ouvre pour des variations de volume de la chambre de travail inférieures à un seuil prédéterminé,
- la grille de maintien comporte des portions périphériques séparées angulairement par des intervalles vides, le clapet anti-retour comportant un bord extérieur épaissi en élastomère qui délimite la membrane souple d'élastomère radialement vers l'extérieur et qui est serré axialement entre lesdites portions périphériques et la première platine, ledit bord extérieur épaissi étant adapté pour se décoller de la première platine au niveau desdits intervalles vides en ouvrant ainsi le clapet anti-retour pour des variations de volume de la chambre de travail supérieures audit seuil prédéterminé,

- la grille de maintien comporte une portion centrale pleine sur laquelle est emboîté sans jeu un bord intérieur épaissi d'élastomère qui délimite intérieurement la membrane souple d'élastomère, ledit bord intérieur épaissi étant serré axialement entre la première platine et la grille de maintien ,
- la portion centrale de la grille de maintien est clipsée par des pattes élastiques dans un orifice ménagé dans la première platine, et les portions périphériques de ladite grille de maintien comportent des rebords en appui sous la première platine.

Par ailleurs, l'invention a également pour objet un véhicule comprenant une caisse et un moteur relié à la caisse par au moins un support antivibratoire tel que défini ci-dessus.

D'autres caractéristiques et avantages de l'invention apparaîtront au cours de la description suivante de deux de ses formes de réalisation, données à titre d'exemples non limitatifs, en regard des dessins joints.

Sur les dessins:
- la figure 1 est une vue schématique d'un véhicule automobile dont le moteur est porté par au moins un support antivibratoire hydraulique selon un premier mode de réalisation de l'invention,
- la figure 2 est une vue de dessus du support antivibratoire du véhicule de la figure 1,
- la figure 3 est une vue éclatée du support antivibratoire du véhicule de la figure 1, avec arrachement partiel,
- la figure 4 est une vue en coupe verticale du support antivibratoire du véhicule de la figure 1, selon la ligne de coupe IV-IV de la figure 2,
- la figure 5 est une vue de détail montrant la première platine du support antivibratoire de la figure 1.
- la figure 6 est une vue analogue à a la figure 4 dans laquelle la membrane souple est en position activée et le clapet anti-retour en position ouverte,

- la figure 7 est une vue de détail montrant la seconde platine du support antivibratoire de la figure 1,
- la figure 8 est une vue analogue à a la figure 4 représentant un second mode de réalisation de l'invention,
- la figure 9 est une vue analogue à a la figure 4 représentant un troisième mode de réalisation de l'invention.
- la figure 10 est une vue analogue à a la figure 4 représentant un quatrième mode de réalisation de l'invention, et

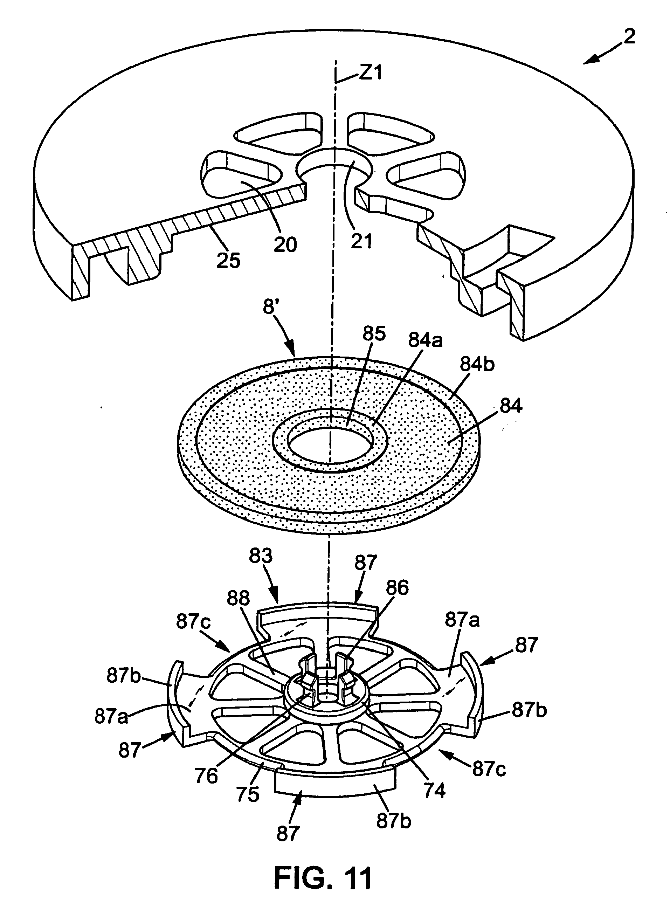

- la figure 11 montre une vue du clapet anti-retour du quatrième mode de réalisation.

Sur les différentes figures, les mêmes références désignent des éléments identiques ou similaires.

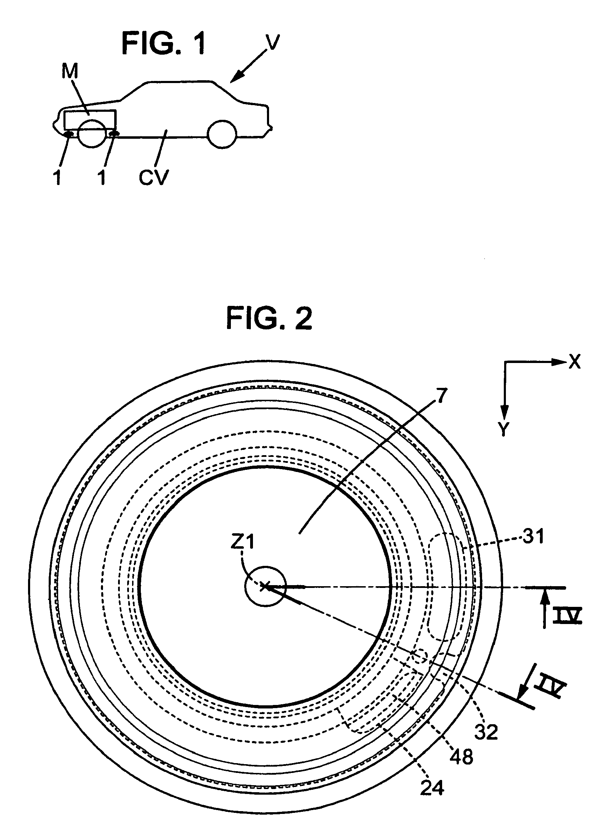

La figure 1 représente un véhicule automobile V dont la caisse CV supporte un moteur M au moyen d'au moins un support antivibratoire hydraulique 1 tel que celui représenté sur les figures 2, 3 et 4 dans une forme de réalisation de l'invention.

Ce support antivibratoire 1 comporte, dans l'exemple représenté :
- une première armature rigide 7 se présentant sous la forme d'une pièce métallique massive, par exemple ayant une face supérieure sensiblement plane et étant de révolution autour d'un axe Z1 sensiblement vertical, munie d'un taraudage 70 pouvant recevoir une vis, et qui est dirigé vers le haut sensiblement selon l'axe central Z1 et qui est destiné à être fixée par exemple au moteur M du véhicule, cette première armature rigide 7 ayant en outre une partie tronconique 72 et sur sa face inférieure une cuvette 71 ouverte vers le bas et centrée sur l'axe Z1,
- une deuxième armature rigide 9, par exemple métallique, qui est destinée à être fixée par exemple à la caisse CV du véhicule, directement ou via une pièce intermédiaire, cette deuxième armature 9 se présentant ici sous la forme d'une virole épaisse, de révolution de préférence autour de l'axe Z1, cette virole épaisse ayant une partie supérieure 90 évasée et ouverte vers le haut, un collet 91 adjacent à la partie supérieure, une partie centrale cylindrique 92 adjacent au collet 91, et enfin une partie inférieure en forme de bord rabattu 93 adjacent à la partie centrale cylindrique 92 et s'étendant radialement vers l'intérieur, bord rabattu 93 qui peut porter sur un rebord appartenant à la caisse CV du véhicule,
- un corps en élastomère 14 capable de se déformer et de supporter notamment les efforts statiques dus au poids du moteur M, ce corps en élastomère pouvant présenter par exemple une forme générale de cloche qui s'étend entre un sommet 140 surmoulé et adhérisé dans la cuvette 71, une projection latérale 141 s'étendant vers le haut et de révolution autour de l'axe Z1, venant épouser la partie tronconique 72 de la première armature, et une base annulaire 142 surmoulée et adhérisée sur la deuxième armature rigide 9, au niveau de la partie supérieure 90 évasée.

De plus, la deuxième armature rigide 9 peut être recouverte comme dans l'exemple représenté sur les figures, par une couche de matériau élastomère solidaire du corps en élastomère 14, tant sur sa partie extérieure 96 que sur sa partie intérieure 95.

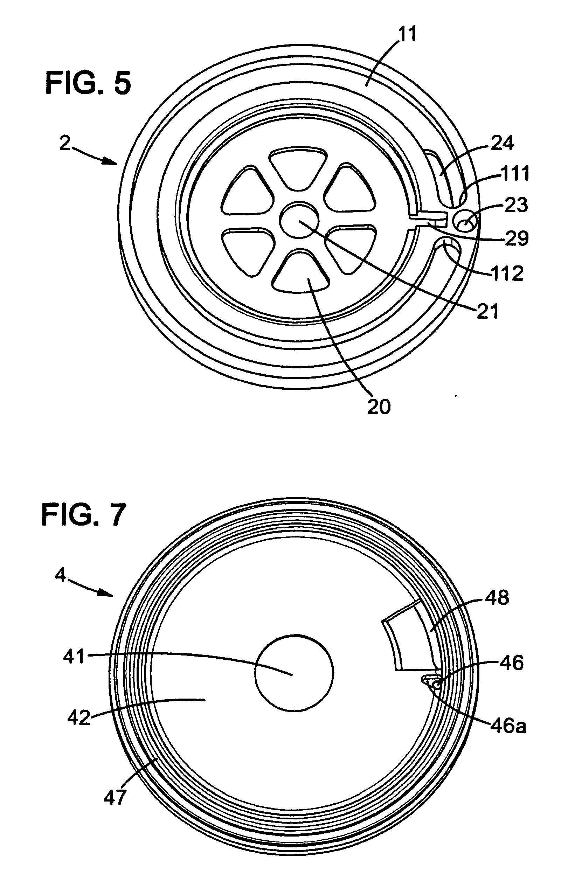

Par ailleurs, sur la deuxième armature 9 est fixée une première platine 2, également illustrée sur la figure 5, qui s'étend perpendiculairement à l'axe Z, et qui a une forme générale de disque centré sur l'axe Z1, comprenant :
- une plaque plane 22, ayant une périphérie circulaire, et centrée sur l'axe Z1, percée d'un orifice central 21 centré sur Z1, et de plusieurs orifices d'entrée 20 (6 dans l'exemple présenté) répartis autour de l'orifice central 21,
- un anneau épais s'étendant axialement depuis la zone périphérique de la plaque plane vers le bas,
- une gorge 11 ménagée le long de cet anneau, présentant une section en U inversé ouverte vers le bas, cette gorge s'étendant sur un secteur angulaire important, depuis une première extrémité 111 jusqu'à une seconde extrémité 112,

- un premier passage traversant 24 qui s'étend en partant du fond de la gorge 11, au niveau de la première extrémité 111, traverse la plaque 22 et débouche sur la face de la plaque opposée à celle ou s'étend l'anneau et la gorge 11,
- un logement borgne tronconique 23, situé sur la périphérie de l'anneau sensiblement entre les première 111 et seconde extrémités 112 de la gorge, ce logement tronconique 23 s'étendant axialement et s'ouvrant vers le bas,
- une encoche 29, située sur le même rayon que le logement tronconique 23, vers l'intérieur, ouverte vers le centre de la plaque plane 22 et vers le bas.

Le corps en élastomère 14 délimite avec cette première platine 2 une chambre de travail A remplie de liquide, dont le fonctionnement sera décrit en détails plus loin.

Dans cette première platine 2, vient s'engager un clapet anti-retour 8, en matière souple, comprenant un disque 81 plaqué contre la plaque plane 22 et recouvrant hermétiquement les orifices d'entrée 20 à l'état de repos, et une excroissance axiale centrée sur l'axe Z1, en forme de champignon 82, reçue dans l'orifice central 21. La tête de ce champignon 82 présente un diamètre supérieur à l'orifice central 21, et la tige de ce champignon 82 a un diamètre sensiblement égale à l'orifice central 21, et compte tenu des possibilités de déformations du matériau souple du champignon, il peut être inséré l'orifice central 21, et est maintenu et verrouillé dans sa position (tel que représenté sur les figures) une fois inséré. Le disque 81 étant souple, il peut se déformer sous l'effet de la pression de liquide régnant au niveau des orifices d'entrée 20 pour laisser passer du liquide, comme cela sera décrit plus loin en détails. Le clapet anti-retour 8 peut le cas échéant être équipé d'un noyau de renfort (non représenté sur les figures) logé dans son disque 81 et/ou dans l'excroissance 82 en forme de champignon.

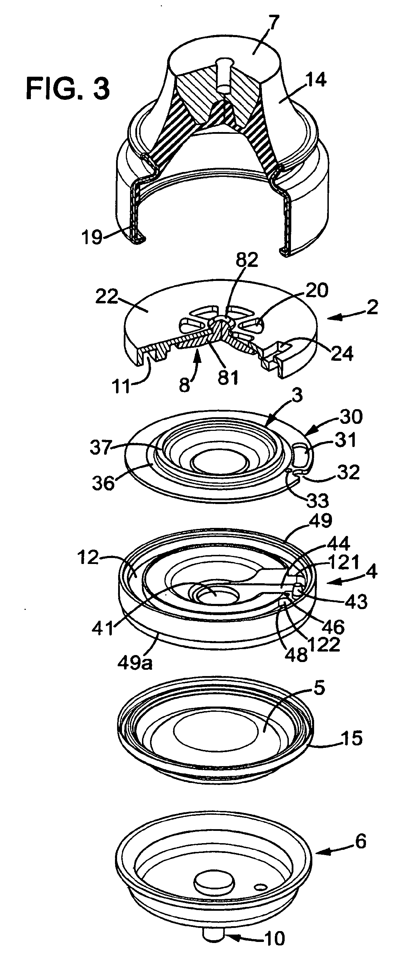

Par ailleurs, sur la deuxième armature 9 est également fixée une seconde platine 4, également illustrée sur la figure 7, qui s'étend perpendiculairement à l'axe Z, et qui a une forme générale de disque centré autour de l'axe Z1, comprenant :
- une plaque 42, ayant une périphérie circulaire, et centrée sur l'axe Z1, percée d'un orifice principal 41 centré sur Z1, ayant une rainure annulaire 47 sur sa face orientée vers le bas,
- une portion de cuvette épaisse s'étendant axialement depuis la plaque 42 vers le haut, tronquée en partie,
- une cavité 44 ménagée à l'endroit ou le profil de la cuvette est tronqué, ayant une face inférieure, deux côtés et un fond 440,
- une gorge 12 ménagée le long de la périphérie extérieure de cette portion de cuvette, présentant une section en U ouverte vers le haut, cette gorge s'étendant sur un secteur angulaire compris important, depuis une première extrémité 121 jusqu'à une seconde extrémité 122, la première extrémité 121 débouchant dans la cavité 44,
- un bourrelet externe 49 sur la partie supérieure de sa circonférence et un épaulement 49a sur la partie inférieure de sa circonférence,
- une protubérance tronconique 43 présentant une forme complémentaire au logement tronconique 23 de la première platine, et reçue dans celui-ci,
- un passage de fuite, qui comprend un trou calibré 46 qui débouche à proximité de la protubérance 43 sur la face de la seconde platine 4 en vis-à-vis de la première platine 2, le trou calibré 46 étant prolongé par un évidement 46a, qui débouche de l'autre coté de la seconde platine vers le bas,
- un second passage traversant 48 (visible en particulier sur les figures 3 et 7) mettant en communication fluide la seconde extrémité 122 de la gorge 12 avec une chambre de compensation C, remplie de liquide, qui sera décrite en détails plus loin.

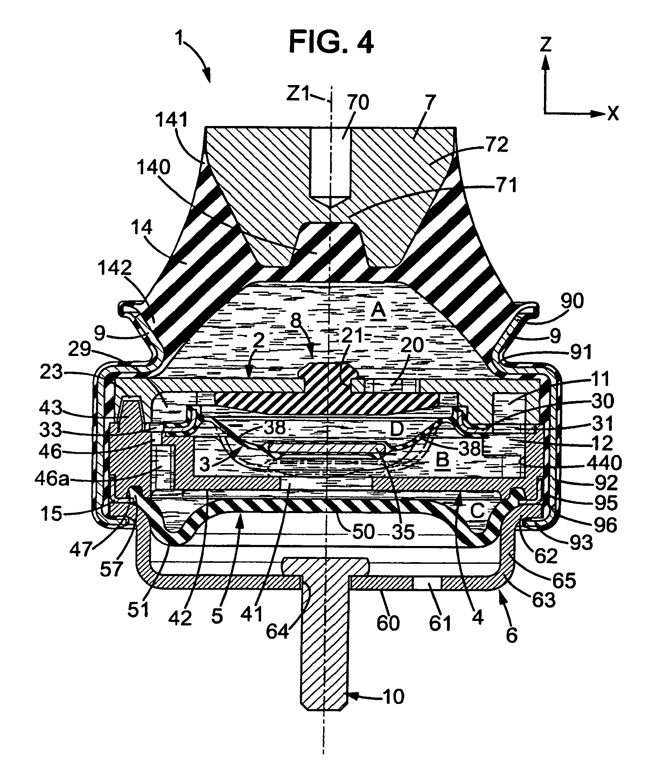

De plus, comme illustré en particulier sur les figures 3 et 4 un flasque rigide 30 est inséré sans jeu entre les première et deuxième platines 2,4 décrites ci-dessus, le flasque rigide 30 étant solidaire de la deuxième armature 9. Ce flasque rigide 30 présente une forme générale annulaire, comprend une partie plate circonférentielle située en périphérie extérieure, perpendiculaire à l'axe Z1, et un bord intérieur recourbé en direction axiale. La partie plate circonférentielle de ce flasque est percée d'un trou de fuite 33 de petite dimension qui se retrouve en vis-à-vis du trou calibré 46, est également percée d'un orifice de transfert 31 en forme de haricot situé en regard de la cavité 44, et comporte une encoche 32 sur sa circonférence dans laquelle est reçue la protubérance 43.

Sur ce flasque rigide 30 est attachée une membrane souple 3 en élastomère, symétrique de révolution autour de l'axe Z1, sa partie périphérique étant surmoulée sur le bord intérieur recourbé du flasque rigide 30.

La membrane souple 3 comprend une zone périphérique 36 adjacente au bord intérieur recourbé du flasque, un renflement 37 faisant saillie axialement vers le haut, une paroi mobile 38 apte à se déplacer axialement, un insert de renfort 35 en forme de disque plat logé dans la partie centrale de la paroi mobile 38 et de diamètre légèrement supérieur au diamètre du orifice principal 41. La membrane souple 3 est représentée sur la figure 4 en trait plein dans sa position de repos, et en trait mixte dans sa position activée, dans laquelle elle obture l'orifice principal, 41 ladite membrane étant apte à se déformer sous l'effet des différences de pression entre ses deux faces.

La membrane souple 3 délimite avec la deuxième platine 4 une chambre intermédiaire B, remplie de liquide, et de plus la membrane souple 3 délimite avec la première platine 2 une chambre auxiliaire D, remplie de liquide, le fonctionnement hydrauliques de ces chambres intermédiaire et auxiliaire sera décrit plus loin.

Enfin, sont également solidaires de la deuxième armature 9 :
- une poche souple 5, en matériau déformable, de préférence un élastomère, symétrique de révolution autour de l'axe Z1, qui comprend une section centrale 50, un renflement annulaire 51 destiné à faciliter la déformation de la poche, et un bourrelet périphérique 57 reçu dans la rainure 47 de la seconde platine 4, cette poche souple 5 délimitant avec la plaque 42 de la seconde platine 4 la chambre de compensation C,
- une bague d'insert 15, également symétrique de révolution autour de l'axe Z1, et de section en forme de L, venant maintenir rigidement le renflement annulaire 51 de la poche souple 5 dans la rainure 47 de la seconde platine 4,
- un couvercle de fixation 6, d'épaisseur sensiblement constante et en forme de cuvette, comprenant une partie centrale 60 en forme de disque plat avec un trou central 64, un orifice de mise à l'air 61, une courbure 63, une partie cylindrique 65, adjacente à la courbure 63, une seconde courbure et une collerette 62 périphérique s'étendant radialement vers l'extérieur et qui est reçue et maintenue rigidement dans la partie inférieure de la deuxième armature 9, contre le bord rabattu 93 de la deuxième armature 9, de sorte que le couvercle de fixation 6 set totalement solidaire de la deuxième armature 9.

Un goujon 10 ou tout autre moyen de fixation est reçu dans le trou central 64, pour fixer le support antivibratoire hydraulique 1 sur la caisse CV du véhicule.

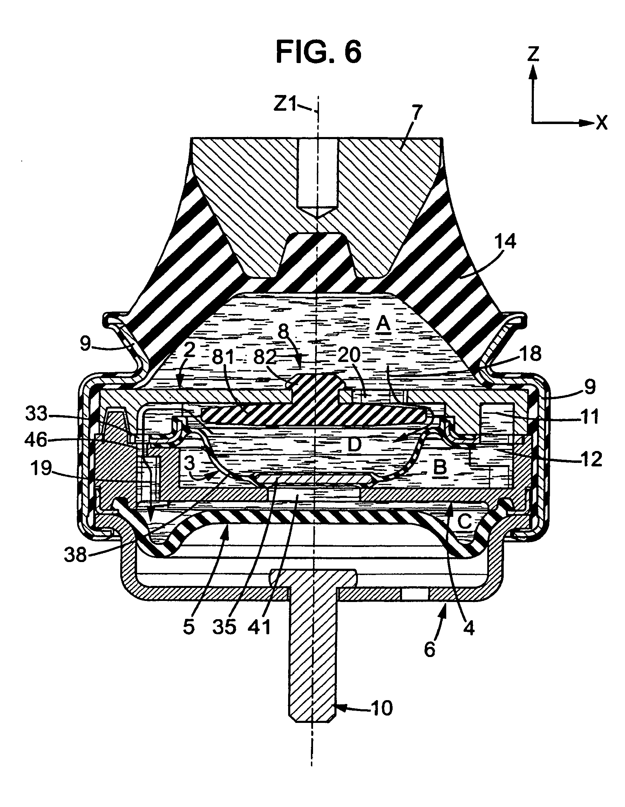

Ainsi, le support antivibratoire hydraulique 1 comprend les volumes intérieurs et passages remplis de liquide suivants :
- la chambre de travail A, délimitée par le corps en élastomère 14 et la première platine 2,
- la chambre intermédiaire B, délimitée par la membrane souple 3 et la deuxième platine 4,
- la chambre de compensation C, délimitée par la deuxième platine 4 et la poche souple 5,
- la chambre auxiliaire D, délimitée par la première platine 2 et la membrane souple 3,
- un premier passage étranglé 11, qui relie la chambre de travail A à la chambre intermédiaire B, comprenant le premier passage traversant 24 de la première platine, la gorge 11 de la première platine, et l'orifice de transfert 31,
- un second passage étranglé 12, qui relie la chambre intermédiaire B à la chambre de compensation C, comprenant la gorge 12 de la seconde platine, et le second passage traversant 48 de la seconde platine,
- un passage de fuite 46, qui relie la chambre auxiliaire D à la chambre de compensation C, constituant un second chemin d'écoulement 19, illustré sur la figure 6, qui passe par l'encoche 29 de la première platine, le trou de fuite 33 du flasque rigide, le trou calibré 46 et l'évidement traversant 46a de la seconde platine.

De plus, un clapet anti retour 8 permet d'alimenter la chambre auxiliaire D, dans certaines conditions de sollicitations vibratoires, grâce à un premier chemin d'écoulement 18, représenté sur la figure 6.

Le support antivibratoire qui vient d'être décrit fonctionne comme suit.

Lorsque le moteur du véhicule fonctionne au ralenti, les vibrations du moteur M, de fréquence généralement comprise entre 15 et 200 Hz (notamment de façon préférentielle entre 15 et 50 Hz) et d'amplitude généralement inférieure à 0,1 ou 0,2 mm, sont transmises à la chambre de travail A par le corps en élastomère 14, ce qui provoque des fluctuations de volume de ladite chambre de travail A qui sont transmises par le premier passage étranglé 11 à la chambre intermédiaire B, qui est en communication fluide à faible résistance avec la chambre de compensation C au travers de l'orifice principal 41.

La fréquence de résonance du premier passage étranglé 11 correspond sensiblement à la fréquence des vibrations émises par le moteur au ralenti, ledit premier passage étranglé 11 est alors le siège de phénomènes de résonance qui permettent d'amortir efficacement les vibrations du moteur. En revanche, le second passage étranglé 12 est inactif ou 'court-circuité' car le fluide passe par l'orifice principal 41 qui à une facilité de passage beaucoup plus importante que celle du second passage étranglé 12.

Dans ce mode de fonctionnement, compte tenu de la fréquence élevée des vibrations et de leur faible amplitude, il y a très peu de transfert de liquide entre la chambre de travail A et la chambre auxiliaire D, et le clapet anti-retour 8 reste la plupart du temps fermé.

En particulier, compte tenu de son inertie due à son épaisseur relativement importante (épaisseur sur diamètre de l'ordre de 5 à 11 % dans l'exemple représenté) et de ses possibilités de mouvements dans un seul sens à partir de sa position de repos, le clapet anti-retour 8 ne remplit pas de fonction significative de découplage qui permettrait d'absorber les vibrations de relativement haute fréquence (par exemple de l'ordre de 15 à 200 Hz) et relativement faible amplitude (par exemple inférieure à environ 0,1 ou 0,2 mm).

Lorsque les amplitudes vibratoires restent relativement peu importantes, le clapet anti-retour 8 peut éventuellement s'ouvrir et se fermer alternativement, et à chaque fois qu'il s'ouvre, une quantité de liquide est transférée de la chambre de travail A vers la chambre auxiliaire D, ce qui à tendance à augmenter la pression dans la chambre auxiliaire D. Cependant, le passage de fuite 46 laisse passer, avec un certain débit, du fluide de la chambre auxiliaire D vers la chambre de compensation C selon le second chemin d'écoulement 19 qui a été décrit précédemment, ce qui provoque l'effet inverse, c'est-à-dire la tendance à réduire la pression dans la chambre auxiliaire D.

Tant que les entrées de liquide par le clapet anti-retour 8 restent limitées, elles sont compensées par la sortie provoquée par le passage de fuite 46, de sorte que la membrane souple 3 ne s'écarte que peu de sa position de repos.

Lorsque le véhicule roule, au contraire, le roulage provoque des mouvements vibratoires de grande amplitude (par exemple, supérieure à 0,1 ou 0,2 mm) et de basse fréquence (inférieure à 20 Hz) du moteur M par rapport à la caisse CV, et ces mouvements vibratoires plus importants provoquent l'ouverture forcée alternative du clapet anti-retour 8, ce qui provoque le remplissage la chambre auxiliaire D avec un débit supérieur au débit autorisé par le passage de fuite 46 dans le second chemin d'écoulement 19, ce qui a pour effet d'augmenter la pression dans la chambre auxiliaire D, et de pousser la membrane souple 3 en direction de l'orifice principal 41.

Dès lors que les sollicitations sont assez importantes, la chambre auxiliaire se remplit plus vite qu'elle ne se vide et la membrane souple 3 vient épouser la forme de la portion de cuvette ménagée dans la seconde platine 4, de sorte que la paroi mobile 38 de la membrane souple 3 vient se plaquer contre le fond de la cuvette et en particulier provoque l'obstruction de l'orifice principal 41, configuration qui est représentée sur la figure 6. En outre, l'insert de renfort 35 vient se plaquer en regard de l'orifice principal 41, et comme le diamètre de l'insert de renfort 35 est supérieur à celui de l'orifice principal 41, toute intrusion de la membrane souple 3 à l'intérieur de l'orifice principal 41 ou même de la chambre de compensation C est évitée.

Lorsque l'orifice principal 41 est bouché, le seul canal de communication fluide entre la chambre intermédiaire B et la chambre de compensation C est le second passage étranglé 12, qui présente une facilité de passage inférieure à celle du premier passage étranglé 11, auquel il est relié en mode 'série'. Les déplacements de fluide entre la chambre de travail A et la chambre de compensation C se font suivant un trajet qui comprend le premier passage étranglé 11, la chambre intermédiaire B et le second passage étranglé 12, les caractéristiques d'amortissement du second passage étranglé 12 étant prépondérantes, et donc la fréquence de résonance est inférieure à 20 Hz et un effet de battement de fluide dans cette zone de fréquence permet d'amortir convenablement les mouvements liés au roulage, aussi appelé mouvements de 'hachis'.

Lorsque les mouvements vibratoires de grande amplitude cessent, le clapet 8 reste fermé et la chambre auxiliaire D se vide au travers du passage de fuite 46 selon le second chemin d'écoulement 19, la membrane souple 3 revient alors élastiquement vers sa position de repos, par ses propres caractéristiques élastiques, en libérant le passage de liquide au travers de l'orifice principal 41, et 'court-circuitant' le second passage étranglé 12, ce qui revient à retrouver les caractéristiques d'amortissement du mode 'ralenti', décrit ci-dessus.

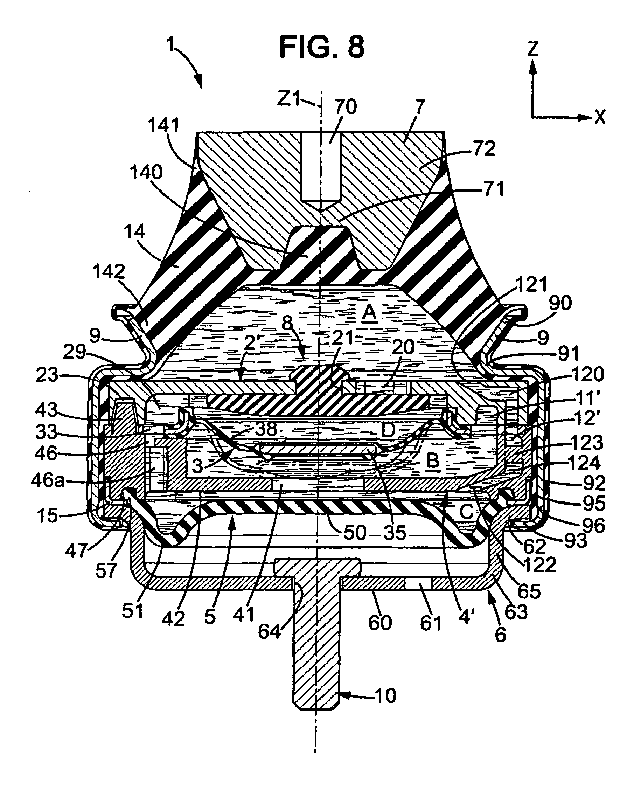

La figure 8 illustre un second mode de réalisation de l'invention, dans lequel le support antivibratoire hydraulique 1 ne diffère de celui du premier mode qu'essentiellement par la configuration du second passage étranglé, et comprend, mutatis mutandis :
- des premières et deuxièmes armatures rigides 7,9 identiques ou similaires à celles décrites dans le premier mode de réalisation de l'invention, reliées entre elles par un corps en élastomère 14, identique ou similaire à celui décrit dans le premier mode de réalisation,
- un couvercle de fixation 6 identique ou similaire à celui décrit dans le premier mode de réalisation, qui est totalement solidaire de la deuxième armature 9, et équipé d'un goujon 10 pour la fixation,
- une première platine 2' qui présente certaines différences par rapport à la platine 2 du premier mode de réalisation, ces différences seront détaillées dans les paragraphes suivants,
- une seconde platine 4' qui présente certaines différences par rapport à la platine 4 du second mode de réalisation, ces différences seront détaillées dans les paragraphes suivants,
- un clapet 8 anti-retour identique ou similaire à celui décrit dans le premier mode de réalisation, et qui alimente la chambre auxiliaire D, dans certaines conditions de sollicitations vibratoires, grâce à un premier chemin d'écoulement 18, identique ou similaire à celui décrit dans le premier mode de réalisation,

- une membrane souple 3 identique ou similaire à celle décrite dans le premier mode de réalisation, solidaire d'un flasque rigide 30 identique ou similaire à celui décrit dans le premier mode de réalisation,
- une poche souple 5 identique ou similaire à celle décrite dans le premier mode de réalisation,
- une chambre de travail A, délimitée par le corps en élastomère 14 et la première platine 2', identique ou similaire à celle décrite dans le premier mode de réalisation,
- une chambre intermédiaire B, délimitée par la membrane souple 3 et la deuxième platine 4', identique ou similaire à celle décrite dans le premier mode de réalisation,
- une chambre de compensation C, délimitée par la deuxième platine 4' et la poche souple 5, identique ou similaire à celle décrite dans le premier mode de réalisation,
- une chambre auxiliaire D, délimitée par la première platine 2' et la membrane souple 3, identique ou similaire à celle décrite dans le premier mode de réalisation,
   Par ailleurs, le support antivibratoire hydraulique 1 comprend un premier passage étranglé 11', qui relie la chambre de travail A à la chambre intermédiaire B, comprenant le premier passage traversant 24 de la première platine 2', la gorge 11' de la première platine 2', et l'orifice de transfert 31,
- un second passage étranglé 12', qui relie directement la chambre de travail A à la chambre de compensation C, sans passer par la chambre intermédiaire B,
- un passage de fuite 46, qui relie la chambre auxiliaire D à la chambre de compensation C, constituant un second chemin d'écoulement 19, qui passe par l'encoche 29 de la première platine, le trou de fuite 33 du flasque rigide, le trou calibré 46 et l'évidement traversant 46a de la seconde platine 4'.

Dans ce deuxième mode, la structure et le fonctionnement de la chambre auxiliaire D, tant pour son alimentation que pour sa purge, sont identiques ou similaires à ceux décrits dans le premier mode de réalisation et donc ne seront pas décrits à nouveau en détails ici.

De même la structure et le fonctionnement du premier passage étranglé 11', qui relie la chambre de travail A à la chambre intermédiaire B, sont identiques ou similaires à ceux décrits dans le premier mode de réalisation et donc ne seront pas décrits à nouveau en détails ici.

En revanche le second passage étranglé 12' présente une configuration différente car il relie directement la chambre de travail A à la chambre de compensation C, sans passer par la chambre intermédiaire B, et comprend :
- un ouverture 121 de communication avec la chambre de travail A,
- une première section 120 comprenant un canal ménagé dans la première platine 2' qui débouche par une ouverture de communication avec une deuxième section 124,
- ladite deuxième section 124 comprenant un second canal ménagé dans la seconde platine 4', comportant un parcours avec un décrochement 123 selon la direction Y, parcours ayant une longueur et une section telles que les caractéristiques dimensionnelles du second passage étranglé 12' sont compatibles avec la fréquence de résonance recherchée (inférieure à 20 Hz),
- une ouverture de communication 122 débouchant dans la chambre de compensation C.

La première platine 2' diffère donc de la première platine 2 du premier mode de réalisation par le fait qu'elle comprend la première section 120 du second passage étranglé 12' et que la gorge 11' du premier passage étranglé est décalée radialement vers le centre.

La seconde platine 4' diffère de la seconde platine 4 du premier mode de réalisation par le fait qu'elle comprend la seconde section 124 du second passage étranglé 12' (au lieu de la totalité du second passage étranglé 12).

Le support antivibratoire selon ce second mode de réalisation fonctionne, mutatis mutandis, comme suit.

Lorsque le moteur du véhicule fonctionne au ralenti, les vibrations du moteur M, de fréquence généralement comprise entre 15 et 200 Hz (notamment de façon préférentielle entre 15 et 50 Hz) et d'amplitude généralement inférieure à 0,2 mm, sont transmises à la chambre de travail A par le corps en élastomère 14, ce qui provoque des fluctuations de volume de ladite chambre de travail A qui sont transmises par le premier passage étranglé 11' à la chambre intermédiaire B, qui est en communication fluide à faible résistance avec la chambre de compensation C au travers de l'orifice principal 41.

La fréquence de résonance du premier passage étranglé 11' correspond sensiblement à la fréquence des vibrations émises par le moteur au ralenti, ledit premier passage étranglé 11' est alors le siège de phénomènes de résonance qui permettent d'amortir efficacement les vibrations du moteur. En revanche, le second passage étranglé 12' est inactif ou 'court-circuité' car le fluide passe par le premier passage étranglé 11' et l'orifice principal 41, trajet qui à une facilité de passage beaucoup plus grande.

Dans ce mode de fonctionnement, compte tenu de la fréquence élevée des vibrations, il y a très peu de transfert de liquide entre la chambre de travail A et le clapet anti-retour 8 reste fermé.

Lorsque les amplitudes vibratoires restent relativement peu importantes, le clapet anti-retour 8 peut s'ouvrir et se fermer alternativement, et laisse rentrer une quantité de liquide de la chambre de travail A vers la chambre auxiliaire D, mais, comme cela a été décrit pour le premier mode de réalisation, le débit du passage de fuite 46 est supérieur de sorte que la membrane souple 3 ne s'écarte que peu de sa position de repos.

Lorsque le véhicule roule, au contraire, le roulage provoque des mouvements vibratoires de grande amplitude (par exemple, supérieure à 0,1 ou 0,2 mm) et de basse fréquence (inférieure à 20 Hz) du moteur M par rapport à la caisse CV, qui ont pour effet comme cela a été décrit pour le premier mode de réalisation, d'entrainer le gonflage de la chambre auxiliaire D et l'obturation de l'orifice principal 41.

Lorsque l'orifice principal 41 est bouché, le seul canal de communication fluide entre la chambre de travail A et la chambre de compensation C est le second passage étranglé 12', le premier passage étranglé 11' ne pouvant plus communiquer vers la chambre de compensation C par l'orifice principal 41.

Les caractéristiques du second passage étranglé 12' dont la fréquence de résonance est inférieure à 20 Hz permettent, par un effet de battement de fluide dans cette zone de fréquence, d'amortir convenablement les mouvements liés au roulage, aussi appelé mouvements de 'hachis'.

Lorsque les mouvements vibratoires de grande amplitude cessent, le clapet 8 reste fermé et la chambre auxiliaire D se vide au travers du passage de fuite 46 selon le second chemin d'écoulement 19, la membrane souple 3 revient alors élastiquement vers sa position de repos, par ses propres caractéristiques élastiques, en libérant le passage de liquide au travers de l'orifice principal 41, ce qui rétablit la communication entre le premier passage étranglé 11' et la chambre de compensation C via l'orifice principal 41. La facilité de passage du premier passage étranglé 11' étant plus grande que celle du second passage étranglé 12', c'est le premier passage étranglé 11' qui prend le rôle prépondérant et le second passage étranglé 12' est 'court-circuité'. On retrouve alors les caractéristiques d'amortissement du mode 'ralenti', décrit ci-dessus.

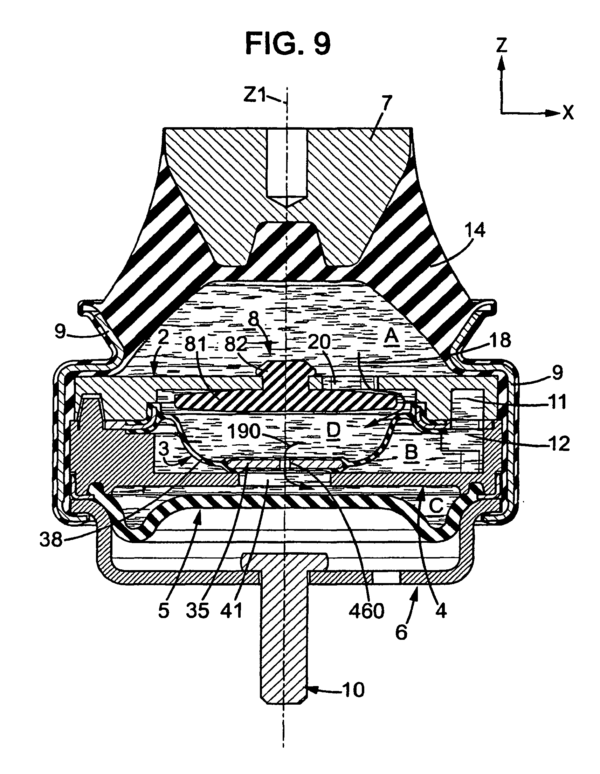

Sur la figure 9 est représenté un troisième mode de réalisation de l'invention, qui ne diffère du premier mode que par la position du canal de fuite qui permet de purger la chambre auxiliaire D. Dans ce mode de réalisation, tous les éléments décrits dans le premier mode sont identiques ou similaires, excepté les suivants :
- le trou calibré 46 de la seconde platine 4 est supprimé et remplacé par un trou calibré 460, ménagé dans la membrane souple 3 et dans l'insert de renfort 35, dans leur partie centrale et manière coaxiale avec l'axe Z1,
- l'évidement 46a est supprimé, de sorte que le chemin d'écoulement 19 défini dans le premier mode de réalisation n'existe plus, le trou 33 ménagé dans le flasque rigide 30 peut lui aussi être supprimé, ainsi que l'encoche 29 de la première platine 2,
- un chemin d'écoulement 190, différent de celui 19 défini dans le premier mode de réalisation, fait communiquer la chambre auxiliaire D avec la chambre de compensation C via le trou calibré 460 et l'orifice principal 41, selon un trajet passant sensiblement par l'axe Z1, et avec un débit prédéterminé comme décrit plu haut.

Lorsque la membrane souple 3 revient vers sa position de repos, elle n'obture plus l'orifice principal 41 et la chambre auxiliaire D communique alors avec la chambre de compensation C via la chambre intermédiaire B et l'orifice principal 41, toujours selon le chemin d'écoulement 190.

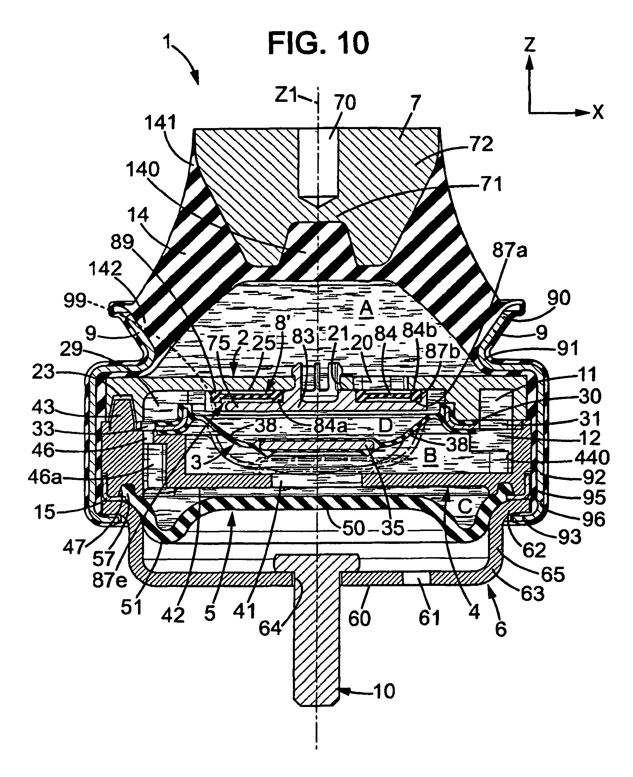

La figure 10 illustre un quatrième mode de réalisation de l'invention, dans lequel le support antivibratoire hydraulique 1 ne diffère de celui du premier mode qu'essentiellement par la configuration du clapet anti-retour 8, et comprend, mutatis mutandis :
- des premières et deuxièmes armatures rigides 7,9 identiques ou similaires à celles décrites dans le premier mode de réalisation de l'invention, reliées entre elles par un corps en élastomère 14, identique ou similaire à celui décrit dans le premier mode de réalisation,
- un couvercle de fixation 6 identique ou similaire à celui décrit dans le premier mode de réalisation, qui est totalement solidaire de la deuxième armature 9, et équipé d'un goujon 10 pour la fixation,

- une première platine 2 identique ou similaire à celle décrite dans le premier mode de réalisation,
- une seconde platine 4 identique ou similaire à celle décrite dans le premier mode de réalisation,
- un clapet anti-retour 8', qui sera décrit en détails plus loin, et qui alimente la chambre auxiliaire D, dans certaines conditions de sollicitations vibratoires, grâce à un premier chemin d'écoulement 18, identique ou similaire à celui décrit dans le premier mode de réalisation, et qui assure en outre une fonction de découplage comme il sera décrit plus en détails ci-après, ledit clapet anti-retour 8' étant maintenu par une grille de maintien 83,
- une membrane souple 3 identique ou similaire à celle décrite dans le premier mode de réalisation, solidaire d'un flasque rigide 30 identique ou similaire à celui décrit dans le premier mode de réalisation,
- une poche souple 5 identique ou similaire à celle décrite dans le premier mode de réalisation,
- une chambre de travail A, délimitée par le corps en élastomère 14 et la première platine 2, identique ou similaire à celle décrite dans le premier mode de réalisation,
- une chambre intermédiaire B, délimitée par la membrane souple 3 et la deuxième platine 4, identique ou similaire à celle décrite dans le premier mode de réalisation,
- une chambre de compensation C, délimitée par la deuxième platine 4 et la poche souple 5, identique ou similaire à celle décrite dans le premier mode de réalisation,
- une chambre auxiliaire D, délimitée par la première platine 2 et la membrane souple 3, identique ou similaire à celle décrite dans le premier mode de réalisation.

Le clapet anti-retour 8' peut être réalisé en élastomère et est en forme de disque annulaire plan perpendiculaire à l'axe Z1, avec un diamètre extérieur qui peut être par exemple de l'ordre de 3 à 5 cm. Le clapet anti-retour 8' comprend :
- une membrane souple d'élastomère 84 s'étendant dans le plan moyen du clapet 8' et présentant une faible épaisseur de l'ordre par exemple de l'ordre de 1 à 2 mm,
- un bord annulaire intérieur épaissi 84a qui délimite la membrane souple d'élastomère 84 radialement vers l'intérieur et qui forme intérieurement un orifice circulaire 85,
- et un bord annulaire extérieur épaissi 84b qui délimite la membrane souple d'élastomère 84 radialement vers l'extérieur.

Les bords épaissis 84a et 84b peuvent avoir par exemple une épaisseur de l'ordre de 4 à 5 mm.

Le clapet 8' est disposé sous la première platine 2 et plus particulièrement en correspondance avec les orifices 20 de cette platine, et il est maintenu sous la première platine 2 par la grille de maintien 83 rigide, réalisée par exemple en matériau thermoplastique et s'étendant dans un plan général perpendiculaire à l'axe Z1.

La grille de maintien 83 est fixée à la première platine 2 et la membrane souple d'élastomère 84 est interposée entre la première platine 2 et ladite grille de maintien 83.

Ladite grille de maintien 83 comprend une portion centrale 74 en forme de disque centré sur l'axe Z1. Ladite portion centrale 74 est munie de pattes 76, par exemple au nombre de quatre, qui s'étendent chacune sensiblement parallèlement à l'axe Z1 jusqu'à une extrémité libre munie d'un crochet 86 orienté radialement vers l'extérieur. Ces pattes 76 sont reçues dans l'orifice 21 de la première platine 2 déjà décrite, et les crochets 86 sont clipsés sur le dessus de ladite platine 2 pour assurer la fixation de la grille de maintien 83 sur la première platine 2.

La grille de maintien 83 comporte en outre des rayons 88 qui s'étendent depuis la portion centrale 74, radialement vers l'extérieur jusqu'à une jante 75 de forme circulaire. A partir de cette jante 75 s'étendent, radialement vers l'extérieur, des portions périphériques 87 qui sont ici au nombre de quatre et sont ici équiréparties angulairement autour de l'axe Z1. Ces portions périphériques 87 comprennent chacune une partie radiale 87a perpendiculaire à l'axe Z1 et une partie de cylindre 87b centrée sur l'axe Z1, dirigée vers la première platine 2 et destinée à rester en contact avec la plaque plane 22 de la première platine. Les quatre portions périphériques 87 sont régulièrement espacées autour de la périphérie de la jante 75, et entre ces quatre portions périphériques 87 périphériques sont ménagées quatre intervalles 87c, chacun s'étendant sur 45° environ. Les parties radiales 87a des différentes portions périphériques 87 forment avec les rayons 88 une surface supérieure plane et perpendiculaire à l'axe Z1, orientée vers la membrane d'élastomère 84. les parties de cylindre 87b des portions périphériques 87 et la partie centrale 74 de la grille de maintien 83 font saillie vers la platine 2 d'une même hauteur à partir de cette surface supérieure plane, de sorte que les bords supérieurs des parties de cylindre 87b et de la partie centrale 74 sont en appui contre la surface inférieure plane de la première platine 2.

Le bord intérieur épaissi 84a de la membrane souple d'élastomère 84 est sensiblement de même diamètre que la partie centrale 74 de la grille de maintien 83, et ledit bord intérieur épaissi est emboîté sans jeu autour de la partie centrale. Le bord extérieur épaissi 84b de ladite membrane est emboîté à l'intérieur des parties cylindriques 87b. De plus, le bord intérieur épaissi 84a est en contact à la fois contre les rayons 88 et la surface inférieure de la première platine 2, et le bord extérieur épaissi 84b est en contact à la fois contre la surface supérieure des parties radiales 87a des portions périphériques 87 et contre la surface inférieure de la première platine 2.

En revanche, le bord extérieur épaissi 84b de la membrane d'élastomère 84 n'est pas supporté vers le bas (c'est-à-dire vers la chambre D) au niveau des quatre intervalles 87c, ce qui lui laisse la possibilité de se déformer sous la pression de fluide venant de la chambre de travail A. Cette déformation est représentée en trait pointillés sur la figure 10, du coté gauche, avec le repère 99.

Pour des sollicitations vibratoires de relativement faible amplitude (par exemple moins de 0,1 à 0,2 mm) et de relativement grande fréquence (par exemple de 15 à 200 Hz, préférentiellement de 20 à 50 Hz), correspondant à des variations ou fluctuations de volumes de la chambre de travail inférieures à un seuil prédéterminé, la membrane souple d'élastomère 84 joue le rôle de membrane de découplage et se déforme légèrement sans que sa bordure 89 ne se décolle de la face inférieure 25 de la première platine 2. Il n'y a pas dans ce cas de remplissage de la chambre auxiliaire D et la membrane souple d'élastomère 84 absorbe à elle seule les vibrations en évitant ainsi qu'elles soient transmises à la caisse du véhicule. Dans cette situation, la membrane souple 3 n'obture pas l'orifice principal 41, de sorte que la membrane souple d'élastomère 84 peut vibrer librement en absorbant les vibrations du moteur, les petites variations de volume correspondant à ces vibrations étant elles-mêmes absorbées par des déformations de la poche souple 5.

Pour des sollicitations vibratoires plus importantes en amplitude, à chaque fois que la pression dans la chambre de travail A est supérieure à celle de la chambre auxiliaire D, alors le clapet 8' est poussé en direction de la grille de maintien 83 et le bord extérieur épaissi 84b dudit clapet se décolle de la face inférieure 25 de la première platine 2 aux endroits des quatre intervalles 87c comme décrit plus haut; le clapet anti-retour 8' est alors ouvert et laisse ainsi passer du liquide par les orifices 20 pour remplir la chambre D.

Lorsque la pression dans la chambre de travail A est inférieure à celle de la chambre D, alors la membrane souple d'élastomère 84 est poussée en direction de la face inférieure 25 de la première platine 2 ; le clapet anti-retour 8' est alors fermé et ne laisse pas passer de liquide en direction de la chambre auxiliaire D.

Le fonctionnement du remplissage et de la purge de la chambre auxiliaire D est similaire à ce qui a été décrit pour les trois premiers modes de réalisation. L'obturation de l'orifice principal 41 et le basculement d'un mode de fonctionnement vers l'autre et vice-versa est également similaire à ce qui a été décrit pour les trois premiers modes de réalisation.

Les éléments du clapet anti-retour 8' décrit dans le quatrième mode peuvent bien sûr être associés aux éléments du deuxième et/ou troisième mode de réalisation décrits plus haut.

Sans sortir du cadre de la présente invention, on peut tout-à-fait relier la première armature à la caisse CV du véhicule et la deuxième armature au moteur M, les caractéristiques et le fonctionnement restant identiques ou similaires.

De même, les formes des première et deuxième armatures 7,9 peuvent être facilement adaptées pour convenir à des montages différents sur la caisse CV ou le moteur M. En particulier, la seconde armature 9 peut avoir un épaulement extérieur à tout niveau de sa périphérie extérieur pour être reçu dans un logement correspondant appartenant à la caisse CV du véhicule.

## Revendications

1. Support antivibratoire hydraulique (1) destiné à être interposé aux fins d'amortissement entre des premier et deuxième éléments rigides, ce support antivibratoire comprenant :
- des première et deuxième armatures (7, 9) destinées à être fixées aux deux éléments rigides,
- une première platine (2) solidaire de la deuxième armature (9),
- un corps en élastomère (14) qui relie entre elles les deux armatures (7, 9) et qui délimite, avec la première platine (2), une chambre de travail (A) remplie de liquide,
- un premier passage étranglé (11) rempli de liquide qui présente une première fréquence de résonance, et qui relie la chambre de travail (A) à une chambre intermédiaire (B),
- une seconde platine (4), solidaire de la deuxième armature (9) et comprenant un orifice principal (41),
- une poche souple (5) qui délimite avec ladite seconde platine (4), une chambre de compensation (C) remplie de liquide,
- un second passage étranglé (12) rempli de liquide qui présente une seconde fréquence de résonance, le second passage étranglé (12) reliant soit la chambre de compensation (C) à la chambre intermédiaire (B) soit la chambre de compensation (C) directement à la chambre de travail (A), le support antivibratoire hydraulique (1) comprenant en outre une membrane souple (3) délimitant avec la première platine (2) une chambre auxiliaire (D), ladite membrane souple (3) séparant hermétiquement la chambre auxiliaire (D) de la chambre intermédiaire (B), la membrane souple (3) étant apte à se déformer pour obturer l'orifice principal (41), dans lequel
directement la chambre auxiliaire (D) est alimentée depuis la chambre de travail (A) par un premier chemin d'écoulement (18) muni d'un clapet anti-retour (8;8') adapté pour permettre uniquement un écoulement de liquide depuis a chambre de travail (A) vers la chambre auxiliaire (D), et dans lequel la chambre auxiliaire (D) peut se purger vers la chambre de compensation (C) par un second chemin d'écoulement (19;190).

2. Support antivibratoire selon la revendication 1, dans lequel la membrane souple (3) présente une position de repos dans laquelle elle n'obture pas l'orifice principal (41), position à laquelle est rappelée par ses propres caractéristiques élastiques lorsque une différence de pression entre la chambre auxiliaire (D) et la chambre intermédiaire(B) est inférieure à une première valeur prédéterminée.

3. Support antivibratoire selon l'une quelconque des revendications précédentes, dans lequel la membrane souple (3) est adaptée pour obturer l'orifice principal (41) lorsque la différence de pression entre la chambre auxiliaire (D) et la chambre intermédiaire (B) dépasse un seuil prédéterminé.

4. Support antivibratoire selon l'une quelconque des revendications précédentes, dans lequel la première platine (2) comprend au moins un orifice d'entrée (20) équipé dudit clapet anti-retour (8;8').

5. Support antivibratoire selon l'une quelconque des revendications précédentes, dans lequel la seconde platine (4) comprend un trou calibré (46;460) appartenant au second chemin d'écoulement (19;190) et faisant communiquer en permanence la chambre auxiliaire (D) avec la chambre de compensation (C).

6. Support antivibratoire selon l'une quelconque des revendications précédentes, dans lequel la membrane souple (3) est réalisée en matériau élastomère,

7. Support antivibratoire selon l'une quelconque des revendications précédentes, dans lequel la membrane souple (3) comporte un insert de renfort (35) situé en vis-à-vis de l'orifice principal (41) et présentant un diamètre supérieur au diamètre du trou principal (41).

8. Support antivibratoire selon l'une quelconque des revendications précédentes, dans lequel la première fréquence de résonance est comprise entre 15 et 200 Hz, et la deuxième fréquence de résonance inférieure à 20 Hz.

9. Support antivibratoire selon l'une quelconque des revendications précédentes, dans lequel le clapet anti-retour (8') comprend une membrane souple d'élastomère (84) qui est interposée avec jeu entre la première platine (2) et une grille de maintien (83) solidaire de la première platine (2), ladite membrane souple d'élastomère (84) du clapet anti-retour étant disposée en regard d'au moins un orifice d'entrée (20) ménagé dans la première platine (2) et ladite grille de maintien (83) communiquant avec la chambre auxiliaire (D), ladite membrane souple d'élastomère (84) du clapet anti-retour étant adaptée pour vibrer librement entre la première platine (2) et la grille de maintien (83) sans que le clapet anti-retour (8') ne s'ouvre pour des variations de volume de la chambre de travail (A) inférieures à un seuil prédéterminé.

10. Support antivibratoire selon la revendication 9, dans lequel la grille de maintien (83) comporte des portions périphériques (87) séparées angulairement par des intervalles vides (87c), le clapet anti-retour (8') comportant un bord extérieur épaissi (84b) en élastomère qui délimite la membrane souple d'élastomère (84) radialement vers l'extérieur et qui est serré axialement entre lesdites portions périphériques (87) et la première platine (2), ledit bord extérieur épaissi (84b) étant adapté pour se décoller de la première platine (2) au niveau desdits intervalles vides (87c) en ouvrant ainsi le clapet anti-retour (8') pour des variations de volume de la chambre de travail (A) supérieures audit seuil prédéterminé.

11. Support antivibratoire selon la revendication 10, dans lequel la grille de maintien (83) comporte une portion centrale (74) pleine sur laquelle est emboîté sans jeu un bord intérieur épaissi (84a) d'élastomère qui délimite intérieurement la membrane souple d'élastomère (84), ledit bord intérieur épaissi étant serré axialement entre la première platine (2) et la grille de maintien (83).

12. Support antivibratoire selon la revendication 11, dans lequel la portion centrale (74) de la grille de maintien (83) est clipsée par des pattes élastiques (76) dans un orifice (21) ménagé dans la première platine (2), et les portions périphériques (87) de ladite grille de maintien (83) comportent des rebords (87b) en appui sous la première platine (2).

13. Véhicule comprenant une caisse (CV) et un moteur (M) relié à la caisse par au moins un support antivibratoire (1) selon l'une quelconque des revendications précédentes.

## Claims

1. Hydraulic antivibration support (1) intended to be placed, for the purposes of damping, between first and second rigid elements, this antivibration support comprising:
- first and second armatures (7, 9) intended to be fixed to the two rigid elements,
- a first plate (2) integral with the second armature (9),
- an elastomeric body (14) which interconnects the two armatures (7, 9) and which delimits, with the first plate (2), a working chamber (A) filled with liquid,
- a first narrowed passage (11) filled with liquid which has a first resonating frequency and which connects the working chamber (A) to an intermediate chamber (B),
- a second plate (4) integral with the second armature (9) and comprising a main orifice (41),
- a flexible pocket (5) which delimits with the said second plate (4) a compensation chamber (C) filled with liquid,
- a second narrowed passage (12) filled with liquid which has a second resonating frequency, the second narrowed passage (12) connecting either the compensation chamber (C) to the intermediate chamber (B) or the compensation chamber (C) directly to the working chamber (A),
the hydraulic antivibration support (1) also comprising a flexible membrane (3) which delimits with the first plate (2) an auxiliary chamber (D), the said flexible membrane (3) hermetically separating the auxiliary chamber (D) from the intermediate chamber (B), the flexible membrane (3) being capable of being deformed in order to shut off the main orifice (41),
wherein the auxiliary chamber (D) is supplied from the working chamber (A) via a first flow path (18) equipped with a non-return valve (8; 8') adapted so as to allow the flow of liquid only from the working chamber (A) to the auxiliary chamber (D), and wherein the auxiliary chamber (D) can drain into the compensation chamber (C) via a second flow path (19; 190).

2. Antivibration support according to Claim 1, in which the flexible membrane (3) has a rest position in which it does not shut off the main orifice (41), into which position it is returned by its inherent elastic characteristics when a pressure differential between the auxiliary chamber (D) and the intermediate chamber (B) is less than a first predetermined value.

3. Antivibration support according to any one of the preceding claims, in which the flexible membrane (3) is adapted so as to shut off the main orifice (41) when the pressure differential between the auxiliary chamber (D) and the intermediate chamber (B) exceeds a predetermined threshold.

4. Antivibration support according to any one of the preceding claims, in which the first plate (2) comprises at least one inlet orifice (20) equipped with the said non-return valve (8; 8').

5. Antivibration support according to any one of the preceding claims, in which the second plate (4) comprises a calibrated hole (46; 460) belonging to the second flow path (19; 190) and bringing the auxiliary chamber (D) into permanent communication with the compensation chamber (C).

6. Antivibration support according to any one of the preceding claims, in which the flexible membrane (3) is made from an elastomeric material.

7. Antivibration support according to any one of the preceding claims, in which the flexible membrane (3) has a reinforcing insert (35) situated opposite the main orifice (41) and having a diameter greater than the diameter of the main hole (41).

8. Antivibration support according to any one of the preceding claims, in which the first resonating frequency is between 15 and 200 Hz, and the second resonating frequency is less than 20 Hz.

9. Antivibration support according to any one of the preceding claims, in which the non-return valve (8') comprises an elastomeric flexible membrane (84) which is placed, with play, between the first plate (2) and a retaining grid (83) integral with the first plate (2), the said elastomeric flexible membrane (84) of the non-return valve being arranged facing at least one inlet orifice (20) formed in the first plate (2), and the said retaining grid (83) communicating with the auxiliary chamber (D), the said elastomeric flexible membrane (84) of the non-return valve being adapted so as to vibrate freely between the first plate (2) and the retaining grid (83) without the non-return valve (8') opening for variations in the volume of the working chamber (A) which are below a predetermined threshold.

10. Antivibration support according to Claim 9, in which the retaining grid (83) has peripheral portions (87) which are separated angularly by empty gaps (87c), the non-return valve (8') having an elastomeric thickened outer edge (84b) which delimits the elastomeric flexible membrane (84) radially on the outside and which is clamped axially between the said peripheral portions (87) and the first plate (2), the said thickened outer edge (84b) being adapted so as to become unstuck from the first plate (2) at the said empty gaps (87c), thus opening the non-return valve (8') for variations in the volume of the working chamber (A) which are greater than the said predetermined threshold.

11. Antivibration support according to Claim 10, in which the retaining grid (83) has a solid central portion (74) over which is fitted, without play, an elastomeric thickened inner edge (84a) which internally delimits the elastomeric flexible membrane (84), the said thickened inner edge being clamped axially between the first plate (2) and the retaining grid (83).

12. Antivibration support according to Claim 11, in which the central portion (74) of the retaining grid (83) is clip-fastened by elastic tabs (76) into an orifice (21) formed in the first plate (2), and the peripheral portions (87) of the said retaining grid (83) have rims (87b) which bear on the underside of the first plate (2).

13. Vehicle comprising a body (CV) and an engine (M) connected to the body by at least one antivibration support (1) according to any one of the preceding claims.

## Patentansprüche

1. Hydraulisches Schwingungsdämpfungslager (1), das dazu bestimmt ist, zu Dämpfungszwecken zwischen einem ersten und einem zweiten starren Element angeordnet zu sein, wobei das Schwingungsdämpfungslager umfasst:
- ein erstes und ein zweites Armierungselement (7, 9), welche dazu bestimmt sind, an den beiden starren Elementen befestigt zu sein,
- eine erste Platte (2), welche einstückig mit dem zweiten Armierungselement (9) ausgebildet ist,
- einen Körper aus Elastomer (14), welcher die beiden Armierungselemente (7, 9) miteinander verbindet und welcher mit der ersten Platte (2) eine mit Flüssigkeit gefüllte Arbeitskammer (A) begrenzt,
- einen ersten mit Flüssigkeit gefüllten Drosseldurchgang (11), der eine erste Resonanzfrequenz aufweist und der die Arbeitskammer (A) mit einer Zwischenkammer (B) verbindet,
- eine zweite Platte (4), welche mit dem zweiten Armierungselement (9) einstückig ausgebildet ist und eine Hauptöffnung (41) umfasst,
- eine flexible Tasche (5), welche mit der zweiten Platte (4) eine mit Flüssigkeit gefüllte Kompensationskammer (C) begrenzt,
- einen zweiten mit Flüssigkeit gefüllten Drosseldurchgang (12), der eine zweite Resonanzfrequenz aufweist,
wobei der zweite Drosseldurchgang (12) entweder die Kompensationskammer (C) mit der Zwischenkammer (B) oder die Kompensationskammer (C) direkt mit der Arbeitskammer (A) verbindet, wobei das hydraulische Schwingungsdämpfungslager (1) ferner eine flexible Membran (3) umfasst, welche mit der ersten Platte (2) eine Hilfskammer (D) begrenzt, wobei die flexible Membran (3) hermetisch die Hilfskammer (D) von der Zwischenkammer (B) trennt, wobei die flexible Membran (3) dazu in der Lage ist, sich zu deformieren, um die Hauptöffnung (41) zu verschließen,
wobei die Hilfskammer (D) von der Arbeitskammer (A) ausgehend durch einen ersten Abflussweg (18) gespeist wird, welcher mit einem Rückschlagventil (8; 8') bereitgestellt ist, das dazu angepasst ist, nur einen Flüssigkeitsfluss von der Arbeitskammer (A) ausgehend zu der Hilfskammer (D) zu erlauben, und wobei die Hilfskammer (D) sich zu der Kompensationskammer (C) über einen zweiten Abflussweg (19; 190) entleeren kann.

2. Hydraulisches Schwingungsdämpfungslager nach Anspruch 1, wobei die flexible Membran (3) eine Ruheposition aufweist, in welcher sie die Hauptöffnung (41) nicht verschließt, wobei sie durch ihre eigenen elastischen Eigenschaften in diese Position zurückkehrt, wenn ein Druckunterschied zwischen der Hilfskammer (D) und der Zwischenkammer (B) kleiner als ein erster vorbestimmter Wert ist.

3. Hydraulisches Schwingungsdämpfungslager nach einem der vorhergehenden Ansprüche, wobei die flexible Membran (3) dazu angepasst ist, die Hauptöffnung (41) zu verschließen, wenn der Druckunterschied zwischen der Hilfskammer (D) und der Zwischenkammer (B) einen vorbestimmten Schwellenwert überschreitet.

4. Hydraulisches Schwingungsdämpfungslager nach einem der vorhergehenden Ansprüche, wobei die erste Platte (2) wenigstens eine Eintrittsöffnung (20) umfasst, welche mit dem Rückschlagventil (8; 8') ausgestattet ist.

5. Hydraulisches Schwingungsdämpfungslager nach einem der vorhergehenden Ansprüche, wobei die zweite Platte (4) ein kalibriertes Loch (46; 460) umfasst, welches zu dem zweiten Abflussweg (19; 190) gehört und eine permanente Kommunikationsverbindung zwischen der Hilfskammer (D) und der Kompensationskammer (C) bereitstellt.

6. Hydraulisches Schwingungsdämpfungslager nach einem der vorhergehenden Ansprüche, wobei die flexible Membran (3) aus einem Elastomermaterial gebildet ist.

7. Hydraulisches Schwingungsdämpfungslager nach einem der vorhergehenden Ansprüche, wobei die flexible Membran (3) einen Verstärkungseinsatz (35) umfasst, welcher der Hauptöffnung (41) gegenüberliegt und einen Durchmesser aufweist, der größer als der Durchmesser der Hauptöffnung (41) ist.

8. Hydraulisches Schwingungsdämpfungslager nach einem der vorhergehenden Ansprüche, wobei die erste Resonanzfrequenz zwischen 15 und 200 Hz liegt und wobei die zweite Resonanzfrequenz kleiner als 20 Hz ist.

9. Hydraulisches Schwingungsdämpfungslager nach einem der vorhergehenden Ansprüche, wobei das Rückschlagventil (8') eine flexible Elastomermembran (84) umfasst, welche mit Spiel zwischen der ersten Platte (2) und einem Haltegitter (83) angeordnet ist, das mit der ersten Platte (2) einstückig ausgebildet ist, wobei die flexible Elastomermembran (84) des Rückschlagventils gegenüber von wenigstens einer Eintrittsöffnung (20) angeordnet ist, welche in der ersten Platte (2) vorgesehen ist, und wobei das Haltegitter (83) mit der Hilfskammer (D) kommuniziert, wobei die flexible Elastomermembran (84) des Rückschlagventils dazu angepasst ist, frei zwischen der ersten Platte (2) und dem Haltegitter (83) zu schwingen, ohne dass das Rückschlagventil (8') sich für Volumenänderungen der Arbeitskammer (A) öffnet, welche kleiner als ein vorbestimmter Schwellenwert sind.

10. Hydraulisches Schwingungsdämpfungslager nach Anspruch 9, wobei das Haltegitter (83) Umfangsabschnitte (87) aufweist, welche winklig durch leere Intervalle (87c) getrennt sind, wobei das Rückschlagventil (8') einen verdickten Außenrand (84b) aus Elastomer aufweist, der die flexible Elastomermembran (84) radial nach außen hin begrenzt und der axial zwischen den Umfangsabschnitten (87) und der ersten Platte (2) eingeklemmt ist, wobei der verdickte Außenrand (84b) dazu angepasst ist, sich von der ersten Platte (2) auf der Höhe der leeren Intervalle (87c) abzulösen und **dadurch** das Rückschlagventil (8') für Volumenänderungen der Arbeitskammer (A) zu öffnen, welche größer als der vorbestimmte Schwellenwert sind.

11. Hydraulisches Schwingungsdämpfungslager nach Anspruch 10, wobei das Haltegitter (83) einen zentralen Vollabschnitt (74) umfasst, auf den spielfrei ein verdickter Innenrand (84a) aus Elastomer aufgesetzt ist, der die flexible Elastomermembran (84) innen begrenzt, wobei der verdickte Innenrand axial zwischen der ersten Platte (2) und dem Haltegitter (83) eingeklemmt ist.

12. Hydraulisches Schwingungsdämpfungslager nach Anspruch 11, wobei der zentrale Abschnitt (74) des Haltegitters (83) durch elastische Laschen (76) in eine Öffnung (21) geclipst ist, welche in der ersten Platte (2) bereitgestellt ist, und wobei die Umfangsabschnitte (87) des Haltegitters (83) Kanten (87b) umfassen, welche unterhalb der ersten Platte (2) gestützt sind.

13. Fahrzeug, umfassend eine Karosserie (CV) und einen Motor (M), welcher mit der Karosserie durch wenigstens ein Schwingungsdämpfungslager (1) nach einem der vorhergehenden Ansprüche verbunden ist.
